# EUROPEAN PATENT APPLICATION

(11) **EP 3 038 347 A1**
(43) Date of publication of application: **29.06.2016**
(21) Application number: 14842079.7
(22) Date of filing: 28.08.2014
(51) Int. Cl.: H04N 5/235, H04N 5/232, G06K 9/00

(54) **METHOD FOR DISPLAYING FOCUS PICTURE AND IMAGE PROCESSING DEVICE**

(30) Priority: 05.09.2013 CN 201310400646
(71) Applicant: Huawei Technologies Co., Ltd., Longgang District Shenzhen, Guangdong 518129 (CN)
(72) Inventor: HU, Changqi, Shenzhen Guangdong 518129 (CN)
(74) Representative: Maiwald Patentanwalts GmbH
(86) International application number: PCT/CN2014/085373
(87) International publication number: WO 2015/032289

(57) **Abstract**

Embodiments of the present invention disclose a method for displaying a focused image and an image processing device. The method in the embodiments of the present invention includes: acquiring an indication information set corresponding to a light-field image selected by a user, where the indication information set includes depth information or area information of an area in which at least one target article in the light-field image is located; and focusing, according to the depth information or the area information of the target article in the acquired indication information set, the light-field image within a depth range indicated by the depth information, or focusing, according to the depth information or the area information of the target article in the acquired indication information set, the light-field image within an area range defined by the area information, and displaying a focused image obtained through focusing, where definition of an area, in which a target article is located, in the focused image is higher than definition of another area of the focused image. In this way, a focused image that can be selected and displayed can be provided for a user, or focused images can be automatically displayed successively, so as to effectively optimize display of a focused image in a light-field image, and improve user experience.

## Description

This application claims priority to Chinese Patent Application No. 201310400646.4, filed with the Chinese Patent Office on September 5, 2013 and entitled "METHOD FOR DISPLAYING FOCUSED IMAGE AND IMAGE PROCESSING DEVICE", which is incorporated herein by reference in its entirety.

### TECHNICAL FIELD

The present invention relates to the field of image technologies, and in particular, to a method for displaying a focused image and an image processing device.

### BACKGROUND

In an optical system of a plenoptic camera, an array of tiny microlenses, configured horizontally and vertically, continuously, and repeatedly and in the form of compound eyes, is inserted between an existing photographing lens and an existing photographing element. The microlenses forming the microlens array distribute light concentrated by the photographing lens to multiple pixels inside the photographing element according to angles at which the light arrives. Specifically, if each image concentrated in the photographing element by using each of the microlenses is referred to as a "sub-image" below, data of an image formed of a set of multiple sub-images is used as data of a photographed image and is output from the photographing element, and this image formed of an aggregate of the multiple sub-images is referred to as a "light-field image".

Because the light-field image is generated by using light that enters through the photographing lens and the microlens array, a photographed image included in the light-field image includes two-dimensional spatial information, and further includes two-dimensional directional information that is not included in an existing photographed image and identifies a direction in which a ray of light arrives from the perspective of the photographing element. Therefore, after the light-field image is photographed by using such two-dimensional directional information, if the plenoptic camera photographs the light-field image without focusing within a specified distance, an image in the case of focusing can also be produced by using data of the light-field image after the image is photographed, so as to generate and display an image after refocusing (refocused image); such a process may be referred to as refocusing of the light-field image.

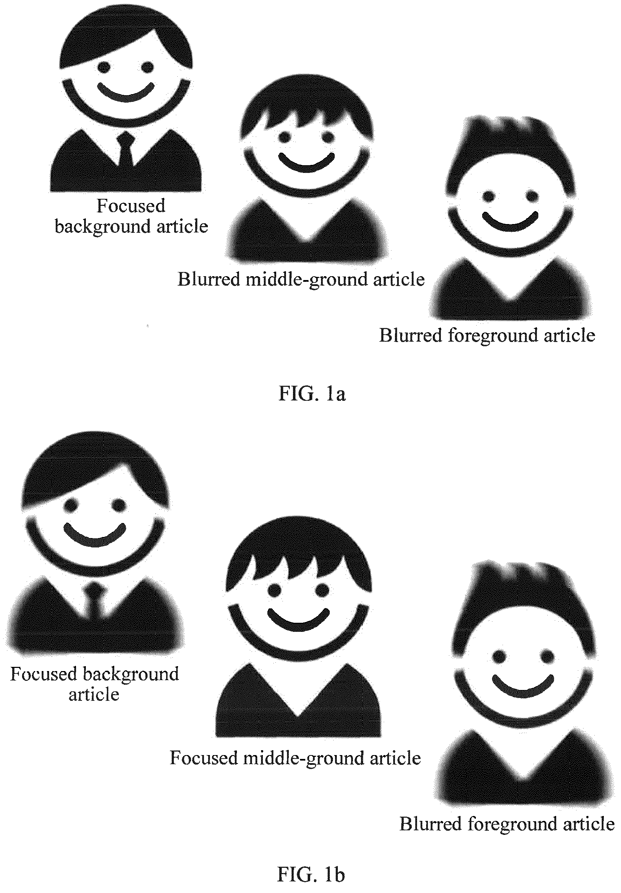

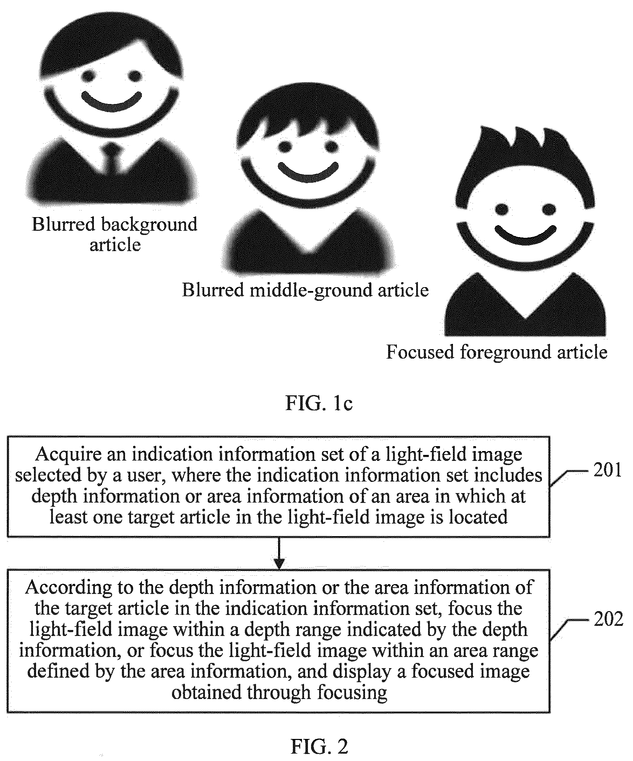

In the prior art, a user can view a light-field image by using a refocusing technology of the light-field image, that is, can select, according to a distance between articles and a camera, different objects to be focused on, to form different images. Specifically, after a system displays a light-field image focused at a particular depth, a user may select a part in the light-field image, and the system may acquire a plane at a depth corresponding to the part, focus on the plane to obtain an image by conversion, and display the image. Referring to FIG. 1a, FIG. 1b, and FIG. 1c, FIG. 1a shows a focused image formed when the user selects a background article as an object to be focused on, FIG. 1b shows a focused image formed when the user selects a middle-ground article as an object to be focused on, and FIG. 1c shows a focused image when the user selects a foreground article as an object to be focused on.

However, for a user that views an image, because the user is not familiar with content included in a photographed light-field image, the user needs to attempt to click at different positions in the light-field image multiple times, to acquire a desired focused image. As a result, an operation of the user is complex and time-consuming, which degrades user experience to a great extent.

### SUMMARY

Embodiments of the present invention provide a method for displaying a focused image and an image processing device, which are used by a user to view a focused image obtained by using a light-field image, so as to effectively optimize display of a focused image in a light-field image, and improve user experience.

A first aspect of the present invention provides a method for displaying a focused image, which may include:
acquiring an indication information set of a light-field image, where the indication information set includes depth information or area information of an area in which at least one target article in the light-field image is located; and
focusing, according to the depth information or the area information of the target article in the indication information set, the light-field image within a depth range indicated by the depth information, or focusing, according to the depth information or the area information of the target article in the indication information set, the light-field image within an area range defined by the area information, and displaying a focused image obtained through focusing, where definition of the area in which the at least one target article is located in the focused image is higher than definition of another area of the focused image.

In a first possible implementation manner of the first aspect, the acquiring an indication information set of a light-field image includes:
acquiring data of the light-field image, where the data of the light-field image includes image data and attribute information, and the attribute information includes the indication information set; and
acquiring the indication information set from the attribute information.

In a second possible implementation manner of the first aspect, the acquiring an indication information set of a light-field image includes:
acquiring data of the light-field image, where the data of the light-field image includes image data and attribute information, and the attribute information includes a correspondence between the light-field image and the indication information set; and
by using the correspondence between the light-field image and the indication information set, reading, from a storage area used for storing an indication information set, the indication information set having the correspondence with the light-field image.

With reference to the first aspect, or the first possible implementation manner of the first aspect, or the second possible implementation manner of the first aspect, in a third possible implementation manner, the at least one target article is multiple target articles, and the indication information set further includes priorities corresponding to the multiple target articles; and
correspondingly, the focusing, according to the depth information or the area information of the target article in the indication information set, the light-field image within a depth range indicated by the depth information, or focusing, according to the depth information or the area information of the target article in the indication information set, the light-field image within an area range defined by the area information, and displaying a focused image obtained through focusing includes:
sequentially acquiring, in a descending order of the priorities corresponding to the multiple target articles in the indication information set, depth information corresponding to the target articles and focusing the light-field image within depth ranges indicated by the depth information, or sequentially acquiring, in a descending order of the priorities corresponding to the multiple target articles in the indication information set, area information corresponding to the target articles and focusing the light-field image within area ranges defined by the area information, and sequentially displaying corresponding focused images.

With reference to the first aspect, or the first possible implementation manner of the first aspect, or the second possible implementation manner of the first aspect, in a fourth possible implementation manner, the at least one target article is multiple target articles, and the indication information set further includes priorities corresponding to the multiple target articles; and
correspondingly, the focusing, according to the depth information or the area information of the target article in the indication information set, the light-field image within a depth range indicated by the depth information, or focusing, according to the depth information or the area information of the target article in the indication information set, the light-field image within an area range defined by the area information, and displaying a focused image obtained through focusing includes:
acquiring depth information corresponding to any target article in the multiple target articles, and focusing the light-field image within a depth range indicated by the depth information; or acquiring area information corresponding to any target article in the multiple target articles, and focusing the light-field image within an area range defined by the area information; or acquiring depth information corresponding to a target article having the highest priority in the multiple target articles, and focusing the light-field image within a depth range indicated by the depth information; or acquiring area information corresponding to a target article having the highest priority in the multiple target articles, and focusing the light-field image within an area range defined by the area information; and displaying a corresponding focused image; and
displaying, according to depth information or area information of another target article in the indication information set, an indication identifier of the another target article on the currently displayed focused image, where the another target article refers to a target article, other than a target article corresponding to the currently displayed focused image, in the multiple target articles included in the indication information set.

With reference to the third possible implementation manner of the first aspect, in a fifth possible implementation manner, after the sequentially acquiring, in a descending order of the priorities corresponding to the multiple target articles in the indication information set, depth information corresponding to the target articles and focusing the light-field image within depth ranges indicated by the depth information, and sequentially displaying corresponding focused images, or sequentially acquiring, in a descending order of the priorities corresponding to the multiple target articles in the indication information set, depth information corresponding to the target articles and focusing the light-field image within area ranges defined by the area information, and sequentially displaying corresponding focused images, the method further includes:
when a pause indication operation of a user is detected, pausing successive display of the focused images, displaying a current focused image, and displaying, according to depth information or area information of another target article in the indication information set, an indication identifier of the another target article on the currently displayed focused image.

With reference to the fifth possible implementation manner of the first aspect, in a sixth possible implementation manner, the method further includes:
after the successive display of the focused images is paused, if a display start indication operation of the user is detected, canceling the pause indication operation, and continuing with the successive display of the focused images.

With reference to the fourth possible implementation manner of the first aspect or the fifth possible implementation manner of the first aspect, in a seventh possible implementation manner, the method further includes:
if a selection operation performed by the user on the indication identifier on the focused image is detected, acquiring the depth information or the area information of the target article corresponding to the indication identifier; and
focusing the light-field image within a depth range indicated by the depth information, or focusing the light-field image within an area range defined by the area information, and updating the currently displayed focused image.

A second aspect of the present invention provides a method for generating an indication information set, which may include:
acquiring initial data of a light-field image;
detecting the initial data of the light-field image to acquire depth information or area information of a target article, including a preset feature, in the light-field image, to form an indication information set of the light-field image; and
storing the indication information set.

In a first possible implementation manner of the second aspect, the storing the indication information set includes:
storing the indication information set into attribute information in the initial data of the light-field image, to obtain data of the light-field image;
   or
storing a correspondence between the light-field image and the indication information set into attribute information in the initial data of the light-field image, to obtain data of the light-field image, and storing the indication information set into a storage area.

With reference to the first aspect or the first possible implementation manner of the first aspect, in a second possible implementation manner, before the storing the indication information set, the method further includes:
determining, according to a system default priority of the preset feature, a priority corresponding to the target article, or determining, according to a priority, predefined by a user, of the preset feature, a priority corresponding to the target article.

A third aspect of the present invention describes an image processing device, which may include:
an acquiring unit, configured to acquire an indication information set of a light-field image, where the indication information set includes depth information or area information of an area in which at least one target article in the light-field image is located; and
a displaying unit, configured to: after the acquiring unit acquires the indication information set, focus, according to the depth information or the area information of the target article in the indication information set, the light-field image within a depth range indicated by the depth information, or focus, according to the depth information or the area information of the target article in the indication information set, the light-field image within an area range defined by the area information, and display a focused image obtained through focusing, where definition of the at least one target article in the focused image is higher than definition of another area of the focused image.

In a first possible implementation manner of the third aspect, the acquiring unit includes:
a first acquiring unit, configured to acquire data of the light-field image, where the data of the light-field image includes image data and attribute information, and the attribute information includes the indication information set; and acquire the indication information set from the attribute information.

In a second possible implementation manner of the third aspect, the acquiring unit includes:
a second acquiring unit, configured to acquire data of the light-field image, where the data of the light-field image includes image data and attribute information, and the attribute information includes a correspondence between the light-field image and the indication information set; and
a third acquiring unit, configured to: after the second acquiring unit acquires the correspondence between the light-field image and the indication information set, by using the correspondence between the light-field image and the indication information set, read, from a storage area used for storing an indication information set, the indication information set having the correspondence with the light-field image.

With reference to the third aspect, the first possible implementation manner of the third aspect, and the second possible implementation manner of the third aspect, in a third possible implementation manner, the at least one target article is multiple target articles, and the indication information set further includes priorities corresponding to the multiple target articles; and
the displaying unit includes:
a first displaying unit, configured to: after the acquiring unit acquires the indication information set, sequentially acquire, in a descending order of the priorities corresponding to the multiple target articles in the indication information set, depth information corresponding to the target articles and focus the light-field image within depth ranges indicated by the depth information, or sequentially acquire, in a descending order of the priorities corresponding to the multiple target articles in the indication information set, area information corresponding to the target articles and focus the light-field image within area ranges defined by the area information, and sequentially display corresponding focused images.

With reference to the third aspect, the first possible implementation manner of the third aspect, and the second possible implementation manner of the third aspect, in a fourth possible implementation manner, the at least one target article is multiple target articles, and the indication information set further includes priorities corresponding to the multiple target articles; and
the displaying unit includes:
a second displaying unit, configured to: after the acquiring unit acquires the indication information set, acquire depth information corresponding to any target article in the multiple target articles, and focus the light-field image within a depth range indicated by the depth information; or acquire area information corresponding to any target article in the multiple target articles, and focus the light-field image within an area range defined by the area information; or acquire depth information corresponding to a target article having the highest priority in the multiple target articles, and focus the light-field image within a depth range indicated by the depth information; or acquire area information corresponding to a target article having the highest priority in the multiple target articles, and focus the light-field image within an area range defined by the area information; and display a corresponding focused image; and
a third displaying unit, configured to: after the second displaying unit displays the focused image, display, according to depth information or area information of another target article in the indication information set, an indication identifier of the another target article on the currently displayed focused image, where the another target article refers to a target article, other than a target article corresponding to the currently displayed focused image, in the multiple target articles included in the indication information set.

With reference to the third possible implementation manner of the third aspect, in a fifth possible implementation manner, the image processing device further includes:
a pausing unit, configured to: after the first displaying unit displays the focused images successively, if a pause indication operation of a user is detected, pause successive display of the focused images, display a currently displayed focused image, and display, according to depth information or area information of another target article in the indication information set, an indication identifier of the another target article on the currently displayed focused image.

With reference to the fifth possible implementation manner of the third aspect, in a sixth possible implementation manner,
the image processing device further includes:
a restarting unit, configured to: after the pausing unit pauses the successive display of the focused images, if a display start indication operation of the user is detected, cancel the pause operation, and continue with the successive display of the focused images.

With reference to the fourth possible implementation manner of the third aspect, in a seventh possible implementation manner, the image processing device further includes:
a click responding unit, configured to: after the second displaying unit displays the indication identifier on the currently displayed focused image, or the pausing unit displays the indication identifier on the currently displayed focused image, if a click operation performed by the user on the indication identifier on the focused image is detected, acquire the depth information or the area information of the target article corresponding to the indication identifier; and
a display updating unit, configured to: after the click responding unit acquires the depth information or the area information, focus, according to the acquired depth information, the light-field image within a depth range indicated by the depth information, or focus the light-field image within an area range defined by the area information, and update the currently displayed focused image.

A fourth aspect of the present invention provides an image processing device, which may include:
an image acquiring unit, configured to acquire initial data of a light-field image;
a set generating unit, configured to: after the image acquiring unit acquires the initial data of the light-field image, detect the initial data of the light-field image to acquire depth information or area information of a target article, including a preset feature, in the light-field image, to form an indication information set of the light-field image; and
a storage unit, configured to store the indication information set after the set generating unit generates the indication information set of the light-field image.

In a first possible implementation manner of the fourth aspect, the storage unit includes:
a first storage unit, configured to: after the set generating unit generates the indication information set, store the indication information set into attribute information in the initial data of the light-field image, to obtain data of the light-field image; or
a second storage unit, configured to: after the set generating unit generates the indication information set, store a correspondence between the light-field image and the indication information set into attribute information in the initial data of the light-field image, to obtain data of the light-field image, and store the indication information set into a storage area.

With reference to the fourth aspect or the first possible implementation manner of the fourth aspect, in a second possible implementation manner, the image processing device further includes:
a priority determining unit, configured to: before the storage unit stores the indication information set, determine, according to a system default priority of the preset feature, or a priority, predefined by a user, of the preset feature, a priority corresponding to the target article.

It can be known from the foregoing technical solutions that the embodiments of the present invention have the following advantages:

An image processing device acquires an indication information set corresponding to a light-field image selected by a user, where the indication information set includes depth information or area information of an area in which at least one target article in the light-field image is located, and focuses, according to the depth information or the area information of the target article in the acquired indication information set, the light-field image within a depth range indicated by the depth information, or focuses, according to the depth information or the area information of the target article in the acquired indication information set, the light-field image within an area range defined by the area information, and displays a focused image obtained through focusing, where definition of the area, in which the at least one target article is located, in the focused image is higher than definition of another area of the focused image. In this way, a focused image that can be selected and displayed can be provided for a user, or focused images can be automatically displayed successively, so as to effectively optimize display of a focused image in a light-field image, and improve user experience.

### BRIEF DESCRIPTION OF DRAWINGS

FIG. 1 a is a schematic diagram of a focused image according to an embodiment of the present invention;
FIG. 1b is another schematic diagram of a focused image according to an embodiment of the present invention;
FIG. 1c is another schematic diagram of a focused image according to an embodiment of the present invention;
FIG. 2 is a schematic diagram of a method for displaying a focused image according to an embodiment of the present invention;
FIG. 3 is a schematic diagram of a method for generating an indication information set according to an embodiment of the present invention;
FIG. 4A and FIG. 4B are another schematic diagram of a method for displaying a focused image according to an embodiment of the present invention;
FIG. 5 is a schematic diagram of a focused image according to an embodiment of the present invention;
FIG. 6 is a schematic structural diagram of an image processing device according to an embodiment of the present invention;
FIG. 7 is another schematic structural diagram of an image processing device according to an embodiment of the present invention;
FIG. 8 is a schematic structural diagram of an image processing device according to an embodiment of the present invention; and
FIG. 9 is a schematic structural diagram of an image processing device according to an embodiment of the present invention.

### DESCRIPTION OF EMBODIMENTS

Embodiments of the present invention provide a method for displaying a focused image and an image processing device, which are used by a user to view a focused image obtained by using a light-field image, so as to effectively optimize display of a focused image in a light-field image, and improve user experience.

Refer to FIG. 2, which shows an embodiment of a method for displaying a focused image in an embodiment of the present invention. The method includes:
201: Acquire an indication information set of a light-field image selected by a user, where the indication information set includes depth information or area information of an area in which at least one target article in the light-field image is located.

In this embodiment of the present invention, before the user generates a refocused image by using data of the light-field image, the user may import the selected light-field image to an image processing device. The data of the light-field image includes image data and attribute information, and the attribute information includes the indication information set of the light-field image or a correspondence between the light-field image and the indication information set.

Preferably, the indication information set includes the depth information or the area information of the area in which at least one target article in the light-field image is located, where the depth information refers to depth information of an area in which a target article in the light-field image is located, and the area information refers to position information of an area in which a target article in the light-field image is located in the light-field image. In this embodiment of the present invention, the target article may be an article, including a preset feature, in the light-field image, and the preset feature may be a human face, a landmark, an animal, a logo, or the like. When the user generates a focused image by using the data of the light-field image, the user may quickly view the focused image of the light-field image by selecting indication information corresponding to the light-field image.

It should be noted that the light-field image acquired by the image processing device in step 201 is a light-field image for which an indication information set is already generated, and a process of generating the indication information set is described in the subsequent embodiment, and is not described in detail herein.

202: According to the depth information or the area information of the target article in the indication information set, focus the light-field image within a depth range indicated by the depth information, or focus the light-field image within an area range defined by the area information, and display a focused image obtained through focusing.

In this embodiment of the present invention, after acquiring the light-field image and the indication information set of the light-field image, the image processing device focuses, according to depth information of a target article included in the indication information set, the light-field image within a depth range indicated by the depth information, and displays a corresponding focused image, or focuses, according to area information of a target article in the indication information set, the light-field image within an area range defined by the area information, and displays a corresponding focused image. Definition of the area, in which the at least one target article is located, in the focused image is higher than definition of another area of the focused image, and definition refers to a degree of distinction of detail textures and borders between the detail textures on an image.

In this embodiment of the present invention, the focused image refers to an image obtained by performing, by using depth information of a target article, a refocusing operation on the light-field image within a depth range indicated by the depth information, or performing, by using area information of a target article, a refocusing operation on the light-field image within an area range defined by the area information.

In this embodiment of the present invention, by using depth information or area information of a target article included in an indication information set of a light-field image, an image processing device focuses the light-field image within a depth range indicated by the depth information, or focuses the light-field image within an area range defined by the area information, and displays a corresponding focused image, so as to achieve an objective of improving user experience.

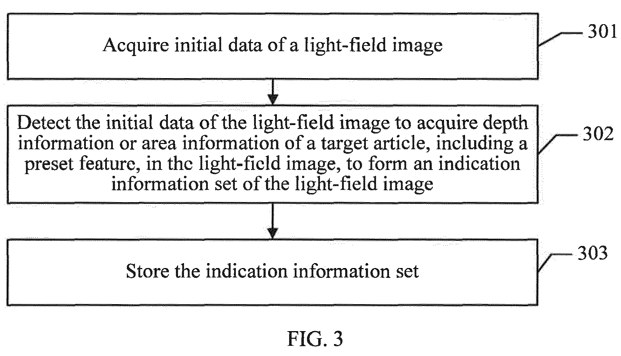

To better understand the technical solution of the method for displaying a focused image in this embodiment of the present invention, a method for generating an indication information set of a light-field image in an embodiment of the present invention is introduced in detail below. Referring to FIG. 3, the method includes:
301: Acquire initial data of a light-field image.

In this embodiment of the present invention, the initial data of the light-field image refers to data that includes neither an indication information set of the light-field image nor a correspondence between the light-field image and the indication information set of the light-field image.

In this embodiment of the present invention, an image processing device may acquire the initial data of the light-field image, and the initial data of the light-field image may be imported to the image processing device from a device having a function of shooting a light-field image, or may be initial data of a light-field image imported from another device. Preferably, an out-of-focus initial image array or a light-field image obtained through partial refocusing may be displayed by using the initial data of the light-field image.

302: Detect the initial data of the light-field image to acquire depth information or area information of a target article, including a preset feature, in the light-field image, to form an indication information set of the light-field image.

In this embodiment of the present invention, the image processing device detects the initial data of the light-field image to acquire the depth information or the area information of the target article, including the preset feature, in the light-field image, to form the indication information set of the light-field image.

In this embodiment of the present invention, the preset feature refers to a feature, preset by a user, in a feature set of target articles, or a feature in a system default feature set of target articles, where the feature set includes: a human face, a landmark, an animal, a logo, and the like. The image processing device searches the light-field image for an article including any feature in the feature set and uses the article as a target article, determines depth information or area information, of the target article, in the light-field image, and forms the indication information set of the light-field image by using all acquired depth information or area information of target articles. The depth information refers to depth information of a target article in the light-field image, and the area information refers to position information, of a target article in the light-field image, in the light-field image.

It should be noted that in this embodiment of the present invention, after the image processing device determines a target article in the light-field image by using the preset feature, and forms the indication information set of the light-field image by using depth information or area information of target articles, to enable the indication information set of the light-field image to better satisfy a demand of the user, the user may further perform an addition or deletion operation on information included in the indication information set. For example, the user may delete depth information or area information of a logo in the indication information set, or the user may determine, in a manner of clicking by using a mouse, clicking on a touch screen, or the like, a target article that needs to be added to the indication information set. After detecting a click operation of the user, the image processing device acquires depth information or area information of a target article corresponding to the click operation, and adds the acquired depth information or area information of the target article to the indication information set, to achieve an objective that the user adds information to the indication information set.

In this embodiment of the present invention, to facilitate display of a focused image in the light-field image, when generating the indication information set, the image processing device may further determine, according to a priority, predefined by the user, of the preset feature or a system default priority of the preset feature, a priority corresponding to the target article; therefore, when focused images of the light-field image are automatically displayed, the images may be displayed in a descending order of priorities corresponding to target articles or an ascending order of the priorities. For example, if a priority of a human face is 10, a priority of a target article, including a human face, in the indication information set is set to 10.

303: Store the indication information set.

In this embodiment of the present invention, the image processing device stores the generated indication information set. Specifically, the image processing device may store the indication information set into attribute information in the initial data of the light-field image, to obtain data of the light-field image, or the image processing device may store the correspondence between the light-field image and the indication information set into attribute information in the initial data of the light-field image, to obtain data of the light-field image, and store the indication information set into a storage area, so that the image processing device may acquire, from the storage area for storing an indication information set, the corresponding indication information set according to the correspondence between the light-field image and the indication information set in attribute information of the data of the light-field image. The initial data of the light-field image includes image data and the attribute information, and the attribute information in the initial data of the light-field image includes neither the indication information set of the light-field image nor the correspondence between the light-field image and the indication information set.

It should be noted that in this embodiment of the present invention, after generating the indication information set of the light-field image, the image processing device may further generate a focused image set by using depth information or area information of target articles in the indication information set, and establish a correspondence between a target article in the indication information set and a focused image in the focused image set, that is, a correspondence between a target article and a focused image. The image processing device may store the correspondence between a target article and a focused image into the attribute information of the initial data of the light-field image, to obtain the data of the light-field image, and store the focused image set into a corresponding storage area; therefore, during display of a focused image of the light-field image, the image processing device can acquire the correspondence between a target article and a focused image from the attribute information of the data of the light-field image, find a corresponding focused image from the storage area by using the correspondence, and display the corresponding focused image. Alternatively, the image processing device may store the correspondence between a target article and a focused image and the focused image set into an attribute of the initial data of the light-field image, to obtain the data of the light-field image; therefore, during display of a focused image of the light-field image, the image processing device can acquire a focused image corresponding to a target article from the attribute information of the light-field image, and display the focused image corresponding to the target article, and during display of a focused image, the image processing device does not need to generate the focused image by using depth information or area information of a target article in the indication information set, but directly displays the focused image, so that a process of generating a focused image in a process of displaying the focused image is prevented, so as to effectively shorten time taken to display the focused image.

It should be noted that in this embodiment of the present invention, the image processing device may further interact with the user to generate the indication information set. Specifically, after the initial data of the light-field image is imported to the image processing device, the image processing device may display the light-field image on a display interface according to the image data included in the initial data of the light-field image, and the user may determine a target article by using a click or touch operation; after detecting the click or touch operation of the user, the image processing device determines depth information or area information, of a target article corresponding to the click or touch operation of the user, in the light-field image, and adds the depth information or the area information of the target article to the indication information set of the light-field image. In addition, the image processing device may further determine, according to a sequence of click or touch operations of the user or priorities set by the user, priorities corresponding to target articles, and store the priorities into the indication information set.

Preferably, in this embodiment of the present invention, the image processing device may record a sequence of target articles, determined by the user by using click or touch operations, in the light-field image; when displaying focused images of the light-field image successively, the image processing device sequentially acquires, according to the sequence and from the indication information set, depth information or area information of corresponding target articles, and performs focusing according to the acquired depth information or area information of the target articles, to display corresponding focused images.

In this embodiment of the present invention, an image processing device detects initial data of a light-field image to acquire depth information or area information of a target article, including a preset feature, in the light-field image, to form an indication information set, and stores the indication information set, so that a focused image in the light-field image can be previewed by using the indication information set, so as to effectively optimize display of a focused image in a light-field image, and improve user experience.

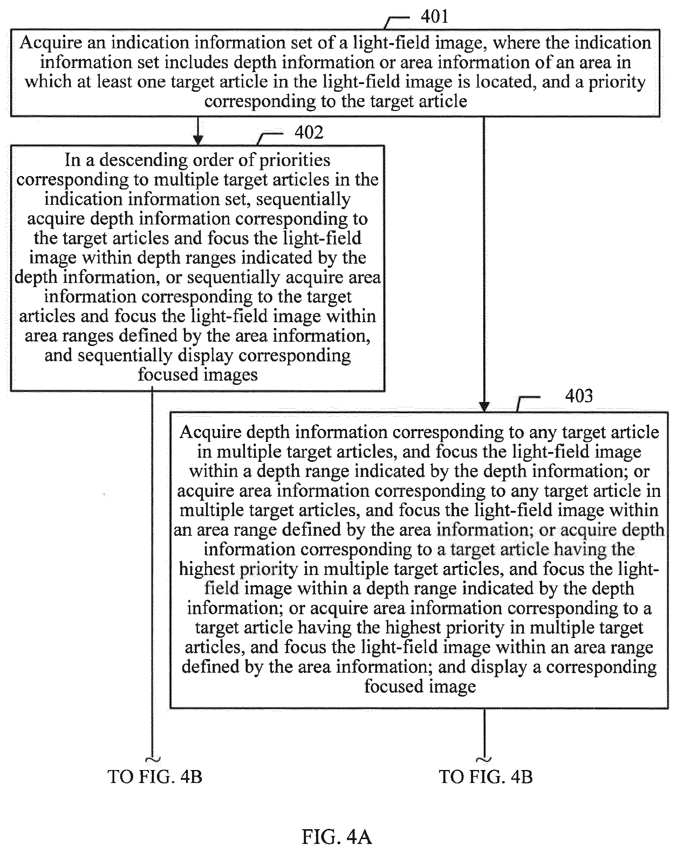

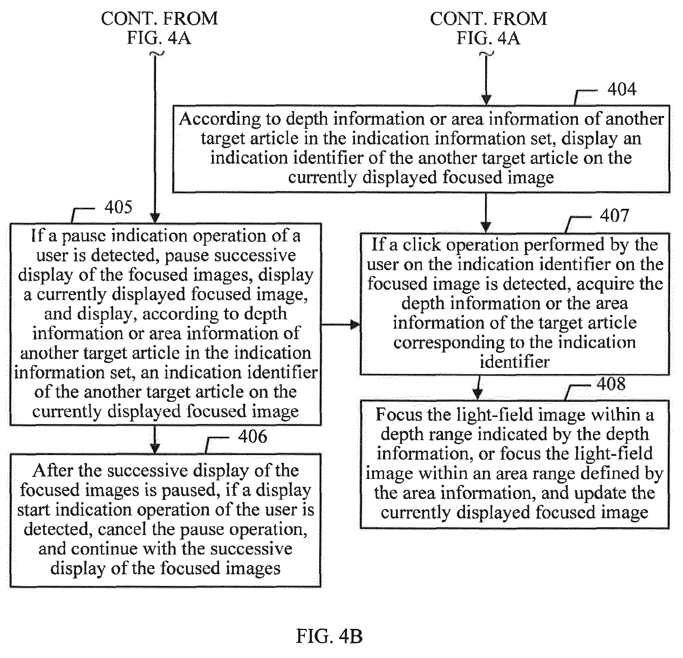

The method for generating an indication information set is described in detail in the embodiment shown in FIG. 3, and a method for displaying a focused image in a light-field image by using an indication information set is described in detail below. Refer to FIG. 4A and FIG. 4B, which shows an embodiment of a method for displaying a focused image in an embodiment of the present invention. The method includes:

401: Acquire an indication information set of a light-field image, where the indication information set includes depth information or area information of an area in which at least one target article in the light-field image is located, and a priority corresponding to the target article, and continue to perform step 402, or continue to perform step 403.

In this embodiment of the present invention, before a user views, on an image processing device by using the light-field image, a focused image related to the light-field image, the user may select the light-field image for which the focused image needs to be viewed, and the image processing device acquires the indication information set of the light-field image selected by the user, where the indication information set includes depth information or area information of a target article in the light-field image, and the indication information set may further include a priority corresponding to a target article in the light-field image.

In this embodiment of the present invention, because the indication information set corresponding to the light-field image may be stored into attribute information in data of the light-field image, or may be stored into a storage area, the acquiring, by the image processing device, the indication information set of the light-field image selected by the user may include: acquiring the data of the light-field image, where the data of the light-field image includes image data and the attribute information, and the attribute information includes the indication information set of the light-field image, or acquiring the data of the light-field image, where the data of the light-field image includes image data and the attribute information, and the attribute information includes a correspondence between the light-field image and the indication information set, searching the storage area according to the correspondence between the light-field image and the indication information set in the attribute information, and reading, from the storage area, the indication information set having the correspondence with the light-field image, where the storage area is a storage area for storing an indication information set.

In this embodiment of the present invention, after the image processing device acquires the indication information set of the light-field image, the image processing device may focus, according to depth information or area information of a target article in the indication information set, the light-field image within a depth range indicated by the depth information, or focus, according to depth information or area information of a target article in the indication information set, the light-field image within an area range defined by the area information, and display a corresponding focused image. Specifically, the image processing device may display a focused image in at least the following two manners, which are separately display manners described in step 402 and step 403.

402: In a descending order of priorities corresponding to multiple target articles in the indication information set, sequentially acquire depth information corresponding to the target articles and focus the light-field image within depth ranges indicated by the depth information, or sequentially acquire area information corresponding to the target articles and focus the light-field image within area ranges defined by the area information, sequentially display corresponding focused images, and continue to perform step 405.

In this embodiment of the present invention, the image processing device may sequentially acquire, in the descending order of the priorities corresponding to the multiple target articles in the indication information set, the depth information corresponding to the target articles, focus the light-field image within the depth ranges indicated by the depth information, and sequentially display the corresponding focused images, or the image processing device may sequentially acquire, in the descending order of the priorities corresponding to the multiple target articles in the indication information set, the area information corresponding to the target articles, focus the light-field image within area the ranges defined by the area information, and sequentially display the corresponding focused images. For example, if the indication information set includes depth information of target articles A, B, C, and D, focused images A1, B1, C1, and D1 can be obtained by focusing the light-field image within depth ranges indicated by the depth information of the target articles A, B, C, and D, and priorities of the target articles A, B, C, and D are C, A, D, and B in descending order, the image processing device displays the focused images C1, A1, D1, and B1 successively. After the focused image B1 is displayed, the image processing device may return to display of the focused image C1, or may stop displaying a focused image, and the user may specifically preset a viewing manner. Duration for displaying each focused image may be preset by the user, or may be system default duration, which is not limited herein.

It should be noted that in an actual application, a change of the priorities of the target articles during the successive display of the focused images may be set according to a specific need, and is not limited herein. In addition, if priorities of multiple target articles are the same, a sequence of displaying focused images corresponding to the multiple target articles is not limited.

It should be noted that: in this embodiment of the present invention, the priorities of the target articles may be priorities set by the user, or system default priorities, or a sequence of displaying the focused images corresponding to the target articles, where the sequence is recorded by the image processing device when the user manually selects the target articles to perform focusing and display the corresponding focused images; or if priorities set by the user and system default priorities are included, a focused image of a target article having a priority set by the user is preferentially displayed.

It should be noted that in this embodiment of the present invention, the method for focusing the light-field image within a depth range indicated by depth information corresponding to a target article, to obtain a corresponding focused image, and displaying the corresponding focused image, and the method for focusing the light-field image within an area range defined by area information corresponding to a target article, to obtain a corresponding focused image, and displaying the corresponding focused image belong to the prior art, and are not described in detail herein again.

403: Acquire depth information corresponding to any target article in multiple target articles, and focus the light-field image within a depth range indicated by the depth information; or acquire area information corresponding to any target article in multiple target articles, and focus the light-field image within an area range defined by the area information; or acquire depth information corresponding to a target article having the highest priority in multiple target articles, and focus the light-field image within a depth range indicated by the depth information; or acquire area information corresponding to a target article having the highest priority in multiple target articles, and focus the light-field image within an area range defined by the area information; and display a corresponding focused image.

In this embodiment of the present invention, the image processing device may focus any target article or the target article having the highest priority in the multiple target articles, and display the corresponding focused image, which may be specifically that: the image processing device acquires the depth information corresponding to any target article in the multiple target articles, focuses the light-field image within the depth range indicated by the depth information, and displays the corresponding focused image; or the image processing device may acquire the area information corresponding to any target article in the multiple target articles, focus the light-field image within the area information, and display the corresponding focused image; or the image processing device may further acquire the depth information corresponding to the target article having the highest priority in the multiple target articles, focus the light-field image within the depth range indicated by the depth information, and display the corresponding focused image; or the image processing device may further acquire the area information corresponding to the target article having the highest priority in the multiple target articles, focus the light-field image within the area range defined by the area information, and display the corresponding focused image.

404: According to depth information or area information of another target article in the indication information set, display an indication identifier of the another target article on the currently displayed focused image.

In this embodiment of the present invention, after focusing any target article in the multiple target articles or focuses the target article having the highest priority in the multiple target articles, the image processing device may further display, according to the depth information or the area information of the another target article in the indication information set, the indication identifier of the another target article on the currently displayed focused image, where the another target article refers to a target article, other than a target article corresponding to the currently displayed focused image, in the multiple target articles included in the indication information set.

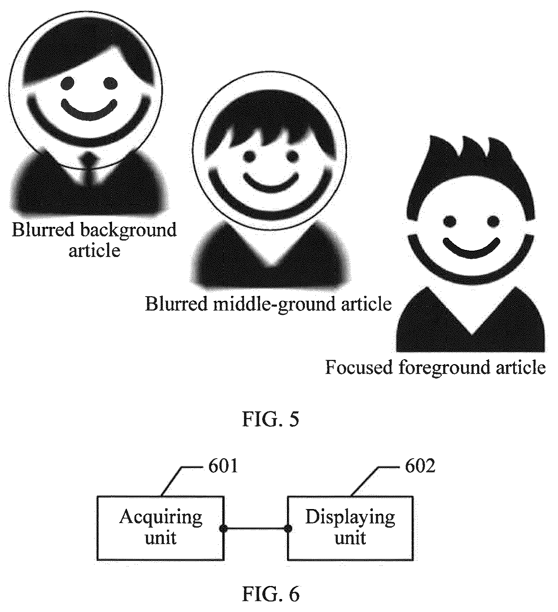

For ease of understanding, a description is provided by using an example in which the image processing device focuses the target article having the highest priority in the multiple target articles, displays the corresponding focused image, and displays an indication identifier of another target article on the focused image. If the indication information set includes depth information of target articles A, B, C, and D, and a target article having the highest priority is the target article C, a focused image C1 is obtained by using the depth information of the target article C, the focused image C1 is displayed, and indication identifiers of the target articles A, B, and D are displayed on the focused image C1 according to the depth information of the target articles A, B, and D. For ease of understanding, refer to FIG. 5, which is a schematic diagram of a focused image according to an embodiment of the present invention. Target articles in FIG. 5 include a foreground article, a middle-ground article, and a background article, FIG. 5 shows a focused image generated by using depth information or area information of the foreground article, and positions of the middle-ground article and the background article are identified by circles in FIG. 5, so that the user can quickly determine the positions of the other target articles on the displayed focused image. In addition, to prevent the circles from affecting viewing of the user, it may be set that the circles disappear after preset time, that is, it may be set that the indication identifiers of the target articles on the currently displayed focused image are canceled after a preset time period, or it may be further set that the indication identifiers of the target articles on the currently displayed focused image are displayed only when a cursor is placed on the target articles. It should be noted that an indication identifier of another target article may be displayed, in many manners, on the currently displayed focused image, and the manners are not limited herein.

405: If a pause indication operation of a user is detected, pause successive display of the focused images, display a currently displayed focused image, display, according to depth information or area information of another target article in the indication information set, an indication identifier of the another target article on the currently displayed focused image, and continue to perform step 406 or 407.

In this embodiment of the present invention, if the image processing device displays the focused images successively according to the content described in step 402, in a process of successively displaying the focused images, the user may control pause or proceeding of the successive display operation by means of an operation. If detecting the pause indication operation of the user, the image processing device pauses the successive display of the focused images, displays the currently displayed focused image, and further displays, according to depth information or area information of another target article in the indication information set, an indication identifier of the another target article on the currently displayed focused image, where the currently displayed focused image refers to a focused image that is being displayed when the successive display is paused, and the another target article refers to a target article, other than a target article corresponding to the currently displayed focused image, in the multiple target articles in the indication information set. For example, the image processing device displays focused images A1, B1, C1, and D1 successively, and detects a display pause operation of the user when the focused image D1 is being displayed. In this case, the image processing device pauses the successive display of the focused images, displays the focused image D1 on a display interface, and displays, on the currently displayed focused image D1, indication identifiers, of target articles corresponding to the other focused images A1, B1, and C1, on the focused image D1.

It should be noted that in this embodiment of the present invention, after the successive display of the focused images is paused, the user may process the focused image that is being currently displayed. For example, the user may delete the focused image that is being currently displayed; after detecting the deletion operation of the user, the image processing device deletes, from the indication information set of the light-field image, depth information or indication information of a target article corresponding to the focused image, so that the deleted focused image is no longer displayed during subsequent successive display of the focused images. In addition, the user may further save the focused image that is being currently displayed; after detecting the saving operation of the user, the image processing device stores, to a default storage area, the focused image that is being currently displayed, or stores, according to a saving path set by the user, the focused image that is being currently displayed.

406: After the successive display of the focused images is paused, if a display start indication operation of the user is detected, cancel the pause operation, and continue with the successive display of the focused images.

In this embodiment of the present invention, after pausing the successive display of the focused images, the user may further start, by means of the display start indication operation, the successive display of the focused images; if detecting the display start indication operation of the user, the image processing device cancels the pause operation, and continues with the successive display of the focused images. For example, the image processing device displays focused images A1, B1, C1, and D1 successively, and detects a pause indication operation of the user when the focused image C1 is being displayed; in this case, the image processing device pauses the successive display of the focused images, and continues with the successive display of the focused images, starting from D1, according to the original display sequence if the display start indication operation of the user is detected again.

It should be noted that in this embodiment of the present invention, the image processing device may display the focused images successively in a descending order of the priorities, or may display the focused images in a random display manner.

407: If a click operation performed by the user on the indication identifier on the focused image is detected, acquire the depth information or the area information of the target article corresponding to the indication identifier.

In this embodiment of the present invention, if the image processing device displays, in the manner described in steps 403 and 404, the focused image, or the successive display of the focused images is paused, the user may update, by clicking on the indication identifier on the currently displayed focused image, the currently displayed focused image, that is, manually select a focused image to be displayed. Therefore, if detecting the click operation performed by the user on the indication identifier on the focused image, the image processing device acquires the depth information or the area information of the target article corresponding to the indication identifier.

408: Focus the light-field image within a depth range indicated by the depth information, or focus the light-field image within an area range defined by the area information, and update the currently displayed focused image.

In this embodiment of the present invention, after acquiring the depth information or the area information of the target article corresponding to the click operation of the user, the image processing device focuses the light-field image within the depth range indicated by the depth information, or focuses the light-field image within the area range defined by the area information, and updates the currently displayed focused image.

For example, in FIG. 5, the image processing device currently displays the focused image of the foreground article. The user clicks on the indication identifier on the background article, the image processing device acquires depth information or area information of the background article in FIG. 5, may specifically acquire the depth information or the area information of the background article from the indication information set, may further focus the light-field image within a depth range indicated by the depth information, or focus the light-field image within an area range defined by the area information, to generate a focused image of the background article, and replaces the currently displayed focused image of the foreground article with the focused image of the background article.

In addition, in this embodiment of the present invention, after the image processing device acquires the depth information or the area information of the target article corresponding to the click operation of the user, the image processing device may further search for a correspondence by using the acquired depth information or area information of the target article, to acquire a corresponding focused image, where the correspondence is a correspondence between depth information or area information of a target article in the indication information set and a focused image in a focused image set. After the corresponding focused image is acquired, the focused image that is being currently displayed is replaced with the focused image, to achieve an objective of updating the currently displayed focused image.

In this embodiment of the present invention, after an image processing device acquires a light-field image and an indication information set corresponding to the light-field image, the image processing device may sequentially acquire, in a descending order of priorities corresponding to target articles included in the indication information set, depth information corresponding to the target articles and focus the light-field image within depth ranges indicated by the depth information, or sequentially acquire, in a descending order of priorities corresponding to target articles included in the indication information set, area information corresponding to the target articles and focus the light-field image within area ranges defined by the area information, and display corresponding focused images, to implement automatic successive display of the focused images; if a pause indication operation of a user is detected, the image processing device may pause the successive display of the focused images, display a current focused image, and display an indication identifier of another target article on the currently displayed focused image; if a display start indication operation of the user is detected again, the image processing device may cancel the pause operation and continue with the successive display of the focused images. Alternatively, after an image processing device acquires a light-field image and an indication information set corresponding to the light-field image, the image processing device performs focusing according to depth information or area information of any target article in multiple target articles in the indication information set, or according to depth information or area information of a target article having the highest priority in the multiple target articles in the indication information set, displays a corresponding focused image, and displays, on the currently displayed focused image, an indication identifier of another target article in the indication information set. In the foregoing manners, successive display of focused images of a light-field image can be implemented, or selectable focused images can be provided by using indication identifiers of target articles, so as to effectively optimize display of a focused image of a light-field image, and improve user experience.

Preferably, if a click operation performed by the user on the indication identifier on the focused image is detected, depth information or area information of the target article corresponding to the indication identifier is acquired, the light-field image within a depth range indicated by the depth information is focused, or the light-field image within an area range defined by the area information is focused, and the currently displayed focused image is updated, so as to effectively optimize display of a focused image of a light-field image, and improve user experience.

Refer to FIG. 6, which shows an embodiment of a structure of an image processing device according to an embodiment of the present invention. The image processing device includes:
an acquiring unit 601, configured to acquire an indication information set of a light-field image, where the indication information set includes depth information or area information of an area in which at least one target article in the light-field image is located; and
a displaying unit 602, configured to: after the acquiring unit 601 acquires the indication information set, focus, according to the depth information or the area information of the target article in the indication information set, the light-field image within a depth range indicated by the depth information, or focus, according to the depth information or the area information of the target article in the indication information set, the light-field image within an area range defined by the area information, and display a focused image obtained through focusing, where definition of the area, in which the at least one target article is located, in the focused image is higher than definition of another area of the focused image.

In this embodiment of the present invention, the acquiring unit 601 in the image processing device acquires the indication information set of the light-field image, where the indication information set includes the depth information or the area information of the area in which the at least one target article in the light-field image is located; next, the displaying unit 602 focuses, according to the depth information or the area information of the target article in the indication information set, the light-field image within the depth range indicated by the depth information, or focuses, according to the depth information or the area information of the target article in the indication information set, the light-field image within the area range defined by the area information, and displays the focused image obtained through focusing, where definition of an area, in which a target article is located, in the focused image is higher than definition of another area of the focused image.

In this embodiment of the present invention, by using depth information or area information of a target article included in the indication information set of the light-field image, the image processing device focuses the light-field image within a depth range indicated by the depth information, or focuses the light-field image within an area range defined by the area information, and displays a corresponding focused image, so as to achieve an objective of improving user experience.

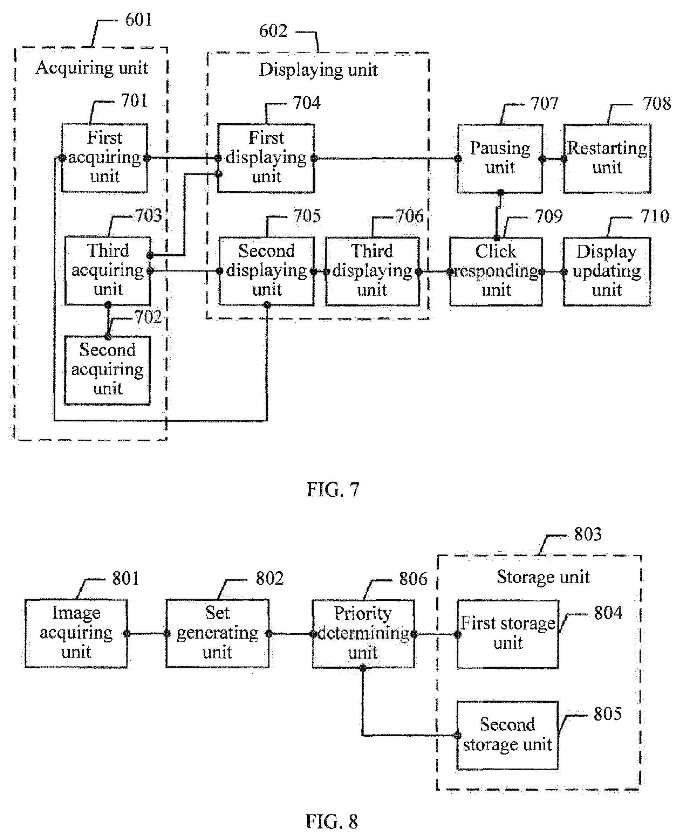

To better understand the image processing device in this embodiment of the present invention, refer to FIG. 7, which shows an embodiment of a structure of an image processing device according to an embodiment of the present invention. The image processing device includes:
the acquiring unit 601 and the displaying unit 602 that are described in the embodiment shown in FIG. 6, which are similar to the content described in the embodiment shown in FIG. 6, and are no longer elaborated herein.

In this embodiment of the present invention, the acquiring unit 601 includes:
a first acquiring unit 701, configured to acquire data of the light-field image, where the data of the light-field image includes image data and attribute information, and the attribute information includes the indication information set; and acquire the indication information set from the attribute information.

Alternatively, in this embodiment of the present invention, the acquiring unit 601 includes:
a second acquiring unit 702, configured to acquire data of the light-field image, where the data of the light-field image includes image data and attribute information, and the attribute information includes a correspondence between the light-field image and the indication information set; and
a third acquiring unit 703, configured to: after the second acquiring unit acquires the correspondence between the light-field image and the indication information set, by using the correspondence between the light-field image and the indication information set, read, from a storage area used for storing an indication information set, the indication information set having the correspondence with the light-field image.

In this embodiment of the present invention, the at least one target article is multiple target articles, and the indication information set further includes priorities corresponding to the multiple target articles, and the displaying unit 602 includes:
a first displaying unit 704, configured to: after the acquiring unit 601 acquires the indication information set, sequentially acquire, in a descending order of the priorities corresponding to the multiple target articles in the indication information set, depth information corresponding to the target articles and focus the light-field image within depth ranges indicated by the depth information, or sequentially acquire, in a descending order of the priorities corresponding to the multiple target articles in the indication information set, area information corresponding to the target articles and focus the light-field image within area ranges defined by the area information, and sequentially display corresponding focused images.

Alternatively, the displaying unit includes:
a second displaying unit 705, configured to: after the acquiring unit 601 acquires the indication information set, acquire depth information corresponding to any target article in the multiple target articles, and focus the light-field image within a depth range indicated by the depth information; or acquire area information corresponding to any target article in the multiple target articles, and focus the light-field image within an area range defined by the area information; or acquire depth information corresponding to a target article having the highest priority in the multiple target articles, and focus the light-field image within a depth range indicated by the depth information; or acquire area information corresponding to a target article having the highest priority in the multiple target articles, and focus the light-field image within an area range defined by the area information; and display a corresponding focused image; and
a third displaying unit 706, configured to: after the second displaying unit 705 displays the focused image, display, according to depth information or area information of another target article in the indication information set, an indication identifier of the another target article on the currently displayed focused image, where the another target article refers to a target article, other than a target article corresponding to the currently displayed focused image, in the multiple target articles included in the indication information set.

In this embodiment of the present invention, the image processing device further includes:
a pausing unit 707, configured to: after the first displaying unit 704 displays the focused images successively, if a pause indication operation of a user is detected, pause successive display of the focused images, display a currently displayed focused image, and display, according to depth information or area information of another target article in the indication information set, an indication identifier of the another target article on the currently displayed focused image.

In this embodiment of the present invention, the image processing device further includes:
a restarting unit 708, configured to: after the pausing unit 707 pauses the successive display of the focused images, if a display start indication operation of the user is detected, cancel the pause operation, and continue with the successive display of the focused images.

In this embodiment of the present invention, the image processing device further includes:
a click responding unit 709, configured to: after the second displaying unit 705 displays the indication identifier on the currently displayed focused image, or the pausing unit 707 displays the indication identifier on the currently displayed focused image, if a click operation performed by the user on the indication identifier on the focused image is detected, acquire the depth information or the area information of the target article corresponding to the indication identifier; and
a display updating unit 710, configured to: after the click responding unit 709 acquires the depth information or the area information, focus the light-field image according to depth information within a preset range in the acquired depth information or an area range defined by the area information, and update the currently displayed focused image.

In this embodiment of the present invention, the first acquiring unit 701 in the acquiring unit 601 in the image processing device acquires the data of the light-field image, where the data of the light-field image includes the image data and the attribute information and the attribute information includes the indication information set, and acquires the indication information set from the attribute information; or the second acquiring unit 702 in the acquiring unit 601 acquires the data of the light-field image, where the data of the light-field image includes the image data and the attribute information, and the attribute information includes the correspondence between the light-field image and the indication information set; and the third acquiring unit 703 in the acquiring unit 601 reads, from the storage area for storing an indication information set, the indication information set having the correspondence with the light-field image by using the correspondence between the light-field image and the indication information set. After the acquiring unit 601 acquires the indication information set of the light-field image, the first displaying unit 704 in the displaying unit 602 sequentially acquires, in the descending order of the priorities corresponding to the multiple target articles in the indication information set, the depth information corresponding to the target articles and focuses the light-field image within the depth ranges indicated by the depth information, or sequentially acquires, in the descending order of the priorities corresponding to the multiple target articles in the indication information set, the area information corresponding to the target articles and focuses the light-field image within the area ranges defined by the area information, and sequentially displays the corresponding focused images; if a pause indication operation of a user is detected, the pausing unit 707 pauses the successive display of the focused images, displays a currently displayed focused image, and displays, according to depth information or area information of another target article in the indication information set, an indication identifier of the another target article on the currently displayed focused image, and after the pausing unit 707 pauses the successive display of the focused images, the restarting unit 708 cancels the pause operation if a display start indication operation of the user is detected, and continues with the successive display of the focused images, or if a click operation performed by the user on the indication identifier on the focused image is detected, the click responding unit 709 acquires the depth information or the area information of the target article corresponding to the indication identifier, and the display updating unit 710 focuses the light-field image according to depth information within a preset range in the acquired depth information, or an area range defined by the area information, and updates the currently displayed focused image.

Alternatively, after the acquiring unit 601 acquires the indication information set of the light-field image, the second displaying unit 705 in the displaying unit 602 acquires depth information corresponding to any target article in the multiple target articles and focuses the light-field image within a depth range indicated by the depth information, or acquires area information corresponding to any target article in the multiple target articles and focuses the light-field image within an area range defined by the area information, or acquires depth information corresponding to a target article having the highest priority in the multiple target articles and focuses the light-field image within a depth range indicated by the depth information, or acquires area information corresponding to a target article having the highest priority in the multiple target articles and focuses the light-field image within an area range defined by the area information, and displays a corresponding focused image; the third displaying unit 706 displays, according to depth information or area information of another target article in the indication information set, an indication identifier of the another target article on the currently displayed focused image, where the another target article refers to a target article, other than a target article corresponding to the currently displayed focused image, in the multiple target articles included in the indication information set, and the another target article refers to a target article, other than a target article corresponding to the currently displayed focused image, in the target articles included in the indication information set, and if a click operation performed by the user on the indication identifier on the focused image is detected, the click responding unit 709 acquires the depth information or the area information of the target article corresponding to the indication identifier, and the display updating unit 710 updates the currently displayed focused image according to depth information within a preset range in the acquired depth information or an area range defined by the area information.

In this embodiment of the present invention, after a image processing device acquires a light-field image and an indication information set corresponding to the light-field image, the image processing device may sequentially acquire, in a descending order of priorities corresponding to target articles included in the indication information set, depth information corresponding to the target articles and focus the light-field image within depth ranges indicated by the depth information, or sequentially acquire, in a descending order of priorities corresponding to target articles included in the indication information set, area information corresponding to the target articles and focus the light-field image within area ranges defined by the area information, and display corresponding focused images, to implement automatic successive display of the focused images; if a pause indication operation of a user is detected, the image processing device may pause the successive display of the focused images, display a current focused image, and display an indication identifier of another target article on the currently displayed focused image; if a display start indication operation of the user is detected again, the image processing device may cancel the pause operation and continue with the successive display of the focused images. Alternatively, after a image processing device acquires a light-field image and an indication information set corresponding to the light-field image, the image processing device performs focusing according to depth information or area information of any target article in multiple target articles in the indication information set, or according to depth information or area information of a target article having the highest priority in the multiple target articles in the indication information set, displays a corresponding focused image, and displays, on the currently displayed focused image, an indication identifier of another target article in the indication information set. In the foregoing manners, successive display of focused images of a light-field image can be implemented, or selectable focused images can be provided by using indication identifiers of target articles, so as to effectively optimize display of a focused image of a light-field image, and improve user experience.

Preferably, if a click operation performed by the user on the indication identifier on the focused image is detected, depth information or area information of the target article corresponding to the indication identifier is acquired, the light-field image within a depth range indicated by the depth information is focused, or the light-field image within an area range defined by the area information is focused, and the currently displayed focused image is updated, so as to effectively optimize display of a focused image of a light-field image, and improve user experience.

Refer to FIG. 8, which shows an embodiment of a structure of an image processing device according to an embodiment of the present invention. The image processing device includes:
an image acquiring unit 801, configured to acquire initial data of a light-field image;
a set generating unit 802, configured to: after the image acquiring unit 801 acquires the initial data of the light-field image, detect the initial data of the light-field image to acquire depth information or area information of a target article, including a preset feature, in the light-field image, to form an indication information set of the light-field image; and
a storage unit 803, configured to store the indication information set after the set generating unit 802 generates the indication information set of the light-field image.

Preferably, in this embodiment of the present invention, the storage unit 803 includes:
a first storage unit 804, configured to: after the set generating unit 802 generates the indication information set, store the indication information set into attribute information in the initial data of the light-field image, to obtain data of the light-field image; or
a second storage unit 805, configured to: after the set generating unit 802 generates the indication information set, store a correspondence between the light-field image and the indication information set into attribute information in the initial data of the light-field image, to obtain data of the light-field image, and store the indication information set into a storage area.

Preferably, in this embodiment of the present invention, the image processing device further includes:
a priority determining unit 806, configured to: before the storage unit 803 stores the indication information set, determine, according to a system default priority of the preset feature, or a priority, predefined by a user, of the preset feature, a priority corresponding to the target article.

In this embodiment of the present invention, the image acquiring unit 801 in the image processing device acquires a light-field image, the set generating unit 802 traverses the light-field image to acquire depth information or area information of a target article, including a preset feature, in the light-field image, to form an indication information set of the light-field image, the priority determining unit 806 may further determine, according to a priority of the preset feature, a priority corresponding to the target article, and finally, the storage unit 803 stores the formed indication information set. Specifically, the first storage unit 804 in the storage unit 803 may store the indication information set into the light-field image, or the second storage unit 805 in the storage unit 803 may store a correspondence between the light-field image and the indication information set into the light-field image and store the indication information set into a storage area.

In this embodiment of the present invention, an image processing device detects initial data of a light-field image to acquire depth information or area information of a target article, including a preset feature, in the light-field image, to form an indication information set, and stores the indication information set, so that a focused image in the light-field image can be previewed by using the indication information set, so as to effectively optimize display of a focused image in a light-field image, and improve user experience.

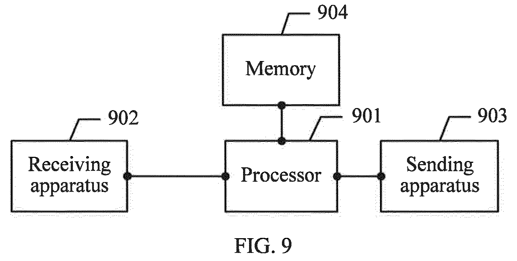

Refer to FIG. 9, which shows an embodiment of a structure of an image processing device according to an embodiment of the present invention. The image processing device specifically includes:
a processor 901, a receiving apparatus 902, a sending apparatus 903, and a memory 904.

The processor 901 is configured to: acquire an indication information set of a light-field image, where the indication information set includes depth information or area information of an area in which at least one target article in the light-field image is located; focus, according to the depth information or the area information of the target article in the indication information set, the light-field image within a depth range indicated by the depth information, or focus, according to the depth information or the area information of the target article in the indication information set, the light-field image within an area range defined by the area information, and display a focused image obtained through focusing, where definition of the area, in which the at least one target article is located, in the focused image is higher than definition of another area of the focused image.

In this embodiment of the present invention, the processor 901 is further configured to acquire initial data of the light-field image, detect the initial data of the light-field image to acquire depth information or area information of a target article, including a preset feature, in the light-field image to form the indication information set of the light-field image, and store the indication information set.

In this embodiment of the present invention, an image processing device is configured to generate an indication information set of a light-field image, and display, by using depth information or area information of a target article included in the indication information set, a corresponding focused image, so as to effectively optimize display of a focused image in a light-field image, and improve user experience.

A person of ordinary skill in the art may understand that all or some of the steps of the methods in the embodiments may be implemented by a program instructing relevant hardware. The program may be stored in a computer readable storage medium. The storage medium may include: a read-only memory, a magnetic disk, or an optical disc.

A method for displaying a focused image and an image processing device that are provided in the present invention are introduced in detail above. A person of ordinary skill in the art may, based on the idea of the embodiments of the present invention, make modifications with respect to the specific implementation manners and the application scope. Therefore, the content of this specification shall not be construed as a limitation to the present invention.

## Claims

1. A method for displaying a focused image, comprising:
acquiring an indication information set of a light-field image, wherein the indication information set comprises depth information or area information of an area in which at least one target article in the light-field image is located; and
focusing, according to the depth information or the area information of the target article in the indication information set, the light-field image within a depth range indicated by the depth information, or focusing, according to the depth information or the area information of the target article in the indication information set, the light-field image within an area range defined by the area information, and displaying a focused image obtained through focusing, wherein definition of the area in which the at least one target article is located in the focused image is higher than definition of another area of the focused image.

2. The display method according to claim 1, wherein the acquiring an indication information set of a light-field image comprises:
acquiring data of the light-field image, wherein the data of the light-field image comprises image data and attribute information, and the attribute information comprises the indication information set; and
acquiring the indication information set from the attribute information.

3. The display method according to claim 1, wherein the acquiring an indication information set corresponding to a light-field image comprises:
acquiring data of the light-field image, wherein the data of the light-field image comprises image data and attribute information, and the attribute information comprises a correspondence between the light-field image and the indication information set; and
by using the correspondence between the light-field image and the indication information set, reading, from a storage area used for storing an indication information set, the indication information set having the correspondence with the light-field image.

4. The display method according to any one of claims 1 to 3, wherein the at least one target article is multiple target articles, and the indication information set further comprises priorities corresponding to the multiple target articles; and
correspondingly, the focusing, according to the depth information or the area information of the target article in the indication information set, the light-field image within a depth range indicated by the depth information, or focusing, according to the depth information or the area information of the target article in the indication information set, the light-field image within an area range defined by the area information, and displaying a focused image obtained through focusing comprises:
sequentially acquiring, in a descending order of the priorities corresponding to the multiple target articles in the indication information set, depth information corresponding to the target articles and focusing the light-field image within depth ranges indicated by the depth information, or sequentially acquiring, in a descending order of the priorities corresponding to the multiple target articles in the indication information set, area information corresponding to the target articles and focusing the light-field image within area ranges defined by the area information, and sequentially displaying corresponding focused images.

5. The display method according to any one of claims 1 to 3, wherein the at least one target article is multiple target articles, and the indication information set further comprises priorities corresponding to the multiple target articles; and
correspondingly, the focusing, according to the depth information or the area information of the target article in the indication information set, the light-field image within a depth range indicated by the depth information, or focusing, according to the depth information or the area information of the target article in the indication information set, the light-field image within an area range defined by the area information, and displaying a focused image obtained through focusing comprises:
acquiring depth information corresponding to any target article in the multiple target articles, and focusing the light-field image within a depth range indicated by the depth information; or acquiring area information corresponding to any target article in the multiple target articles, and focusing the light-field image within an area range defined by the area information; or acquiring depth information corresponding to a target article having the highest priority in the multiple target articles, and focusing the light-field image within a depth range indicated by the depth information; or acquiring area information corresponding to a target article having the highest priority in the multiple target articles, and focusing the light-field image within an area range defined by the area information; and displaying a corresponding focused image; and
displaying, according to depth information or area information of another target article in the indication information set, an indication identifier of the another target article on the currently displayed focused image, wherein the another target article refers to a target article, other than a target article corresponding to the currently displayed focused image, in the multiple target articles comprised in the indication information set.

6. The display method according to claim 4, wherein after the sequentially acquiring, in a descending order of the priorities corresponding to the multiple target articles in the indication information set, depth information corresponding to the target articles and focusing the light-field image within depth ranges indicated by the depth information, and sequentially displaying corresponding focused images, or sequentially acquiring, in a descending order of the priorities corresponding to the multiple target articles in the indication information set, depth information corresponding to the target articles and focusing the light-field image within area ranges defined by the area information, and sequentially displaying corresponding focused images, the method further comprises:
when a pause indication operation of a user is detected, pausing successive display of the focused images, displaying a current focused image, and displaying, according to depth information or area information of another target article in the indication information set, an indication identifier of the another target article on the currently displayed focused image.

7. The display method according to claim 6, wherein the method further comprises:
after the successive display of the focused images is paused, if a display start indication operation of the user is detected, canceling the pause indication operation, and continuing with the successive display of the focused images.

8. The display method according to claim 5 or 6, wherein the method further comprises:
if a selection operation performed by the user on the indication identifier on the focused image is detected, acquiring the depth information or the area information of the target article corresponding to the indication identifier; and
focusing the light-field image within a depth range indicated by the depth information, or focusing the light-field image within an area range defined by the area information, and updating the currently displayed focused image.

9. A method for generating an indication information set, comprising:
acquiring initial data of a light-field image;
detecting the initial data of the light-field image to acquire depth information or area information of a target article, comprising a preset feature, in the light-field image, to form an indication information set of the light-field image; and
storing the indication information set.

10. The generation method according to claim 9, wherein the storing the indication information set comprises:
storing the indication information set into attribute information in the initial data of the light-field image, to obtain data of the light-field image;
or
storing a correspondence between the light-field image and the indication information set into attribute information in the initial data of the light-field image, to obtain data of the light-field image, and storing the indication information set into a storage area.

11. The generation method according to claim 9 or 10, before the storing the indication information set, further comprising:
determining, according to a system default priority of the preset feature, a priority corresponding to the target article, or determining, according to a priority, predefined by a user, of the preset feature, a priority corresponding to the target article.

12. An image processing device, comprising:
an acquiring unit, configured to acquire an indication information set of a light-field image, wherein the indication information set comprises depth information or area information of an area in which at least one target article in the light-field image is located; and
a displaying unit, configured to: after the acquiring unit acquires the indication information set, focus, according to the depth information or the area information of the target article in the indication information set, the light-field image within a depth range indicated by the depth information, or focus, according to the depth information or the area information of the target article in the indication information set, the light-field image within an area range defined by the area information, and display a focused image obtained through focusing, wherein definition of the at least one target article in the focused image is higher than definition of another area of the focused image.

13. The image processing device according to claim 12, wherein the acquiring unit comprises:
a first acquiring unit, configured to acquire data of the light-field image, wherein the data of the light-field image comprises image data and attribute information, and the attribute information comprises the indication information set; and acquire the indication information set from the attribute information.

14. The image processing device according to claim 12, wherein the acquiring unit comprises:
a second acquiring unit, configured to acquire data of the light-field image, wherein the data of the light-field image comprises image data and attribute information, and the attribute information comprises a correspondence between the light-field image and the indication information set; and
a third acquiring unit, configured to: after the second acquiring unit acquires the correspondence between the light-field image and the indication information set, by using the correspondence between the light-field image and the indication information set, read, from a storage area used for storing an indication information set, the indication information set having the correspondence with the light-field image.

15. The image processing device according to any one of claims 12 to 14, wherein the at least one target article is multiple target articles, and the indication information set further comprises priorities corresponding to the multiple target articles; and
the displaying unit comprises:
a first displaying unit, configured to: after the acquiring unit acquires the indication information set, sequentially acquire, in a descending order of the priorities corresponding to the multiple target articles in the indication information set, depth information corresponding to the target articles and focus the light-field image within depth ranges indicated by the depth information, or sequentially acquire, in a descending order of the priorities corresponding to the multiple target articles in the indication information set, area information corresponding to the target articles and focus the light-field image within area ranges defined by the area information, and sequentially display corresponding focused images.

16. The image processing device according to any one of claims 12 to 14, wherein the at least one target article is multiple target articles, and the indication information set further comprises priorities corresponding to the multiple target articles; and
the displaying unit comprises:
a second displaying unit, configured to: after the acquiring unit acquires the indication information set, acquire depth information corresponding to any target article in the multiple target articles, and focus the light-field image within a depth range indicated by the depth information; or acquire area information corresponding to any target article in the multiple target articles, and focus the light-field image within an area range defined by the area information; or acquire depth information corresponding to a target article having the highest priority in the multiple target articles, and focus the light-field image within a depth range indicated by the depth information; or acquire area information corresponding to a target article having the highest priority in the multiple target articles, and focus the light-field image within an area range defined by the area information; and display a corresponding focused image; and
a third displaying unit, configured to: after the second displaying unit displays the focused image, display, according to depth information or area information of another target article in the indication information set, an indication identifier of the another target article on the currently displayed focused image, wherein the another target article refers to a target article, other than a target article corresponding to the currently displayed focused image, in the multiple target articles comprised in the indication information set.

17. The image processing device according to claim 15, wherein the image processing device further comprises:
a pausing unit, configured to: after the first displaying unit displays the focused images successively, if a pause indication operation of a user is detected, pause successive display of the focused images, display a currently displayed focused image, and display, according to depth information or area information of another target article in the indication information set, an indication identifier of the another target article on the currently displayed focused image.

18. The image processing device according to claim 17, wherein the image processing device further comprises:
a restarting unit, configured to: after the pausing unit pauses the successive display of the focused images, if a display start indication operation of the user is detected, cancel the pause operation, and continue with the successive display of the focused images.

19. The image processing device according to claim 16, wherein the image processing device further comprises:
a click responding unit, configured to: after the second displaying unit displays the indication identifier on the currently displayed focused image, or the pausing unit displays the indication identifier on the currently displayed focused image, if a click operation performed by the user on the indication identifier on the focused image is detected, acquire the depth information or the area information of the target article corresponding to the indication identifier; and
a display updating unit, configured to: after the click responding unit acquires the depth information or the area information, focus, according to the acquired depth information, the light-field image within a depth range indicated by the depth information, or focus the light-field image within an area range defined by the area information, and update the currently displayed focused image.

20. An image processing device, comprising:
an image acquiring unit, configured to acquire initial data of a light-field image;
a set generating unit, configured to: after the image acquiring unit acquires the initial data of the light-field image, detect the initial data of the light-field image to acquire depth information or area information of a target article, comprising a preset feature, in the light-field image, to form an indication information set of the light-field image; and
a storage unit, configured to store the indication information set after the set generating unit generates the indication information set of the light-field image.

21. The image processing device according to claim 20, wherein the storage unit comprises:
a first storage unit, configured to: after the set generating unit generates the indication information set, store the indication information set into attribute information in the initial data of the light-field image, to obtain data of the light-field image; or
a second storage unit, configured to: after the set generating unit generates the indication information set, store a correspondence between the light-field image and the indication information set into attribute information in the initial data of the light-field image, to obtain data of the light-field image, and store the indication information set into a storage area.

22. The image processing device according to claim 20 or 21, wherein the image processing device further comprises:
a priority determining unit, configured to: before the storage unit stores the indication information set, determine, according to a system default priority of the preset feature, or a priority, predefined by a user, of the preset feature, a priority corresponding to the target article.
